Europäisches Patentamt

European Patent Office

Office européen des brevets

(11) Veröffentlichungsnummer: **0 016 404 B1**

⑱

(12) **EUROPÄISCHE PATENTSCHRIFT**

(45) Veröffentlichungstag der Patentschrift: **13.06.84**

(21) Anmeldenummer: **80101257.6**

(22) Anmeldetag: **12.03.80**

(51) Int. Cl.³: **H 01 F 10/16,** H 01 F 1/20, G 11 B 5/64

(54) **Magnetischer Aufzeichnungsträger und Verfahren zu seiner Herstellung.**

(30) Priorität: **14.03.79 DE 2909891**

(43) Veröffentlichungstag der Anmeldung:
**01.10.80 Patentblatt 80/20**

(45) Bekanntmachung des Hinweises auf die
Patenterteilung:
**13.06.84 Patentblatt 84/24**

(84) Benannte Vertragsstaaten:
**DE FR GB IT NL**

(56) Entgegenhaltungen:
**DE-A-2 023 353**
**US-A-4 042 341**

**JOURNAL OF APPLIED PHYSICS, Band 40, Nr. 7, Juni 1969, Seiten 2994-2996 H. C. THEUERER et al.: "High-Coercive-Force Rare-Earth Alloy Films by Getter Sputtering"**
**IEEE TRANSACTIONS ON MAGNETICS, Band MAG-9, Nr. 4, Dezember 1973, Seiten 627-631 S.A. BENDSON et al.: "Magnetic Properties of Cobalt Rare-Earth Thin Films"**

(73) Patentinhaber: **BASF Aktiengesellschaft**
**Carl-Bosch-Strasse 38**
**D-6700 Ludwigshafen (DE)**

(72) Erfinder: **Kneller, Eckhart, Dr.**
**Vossegge 23**
**D-5812 Herbede (DE)**
Erfinder: **Koenig, Roland, Dr.**
**Amsterdamer Strasse 14**
**D-6700 Ludwigshafen (DE)**
Erfinder: **Koester, Eberhard, Dr.**
**Max-Slevogt-Strasse 23**
**D-6710 Frankenthal (DE)**
Erfinder: **Grau, Werner, Dr.**
**Tuchbleiche 5**
**D-6712 Bobenheim-Roxheim 5 (DE)**
Erfinder: **Mayer, Dieter, Dr.**
**Berner Weg 28**
**D-6700 Ludwigshafen (DE)**

(56) Entgegenhaltungen:
**IEEE TRANSACTIONS ON MAGNETICS, Band MAG-13, Nr. 5, September 1977, Seiten 1606-1608 A. BRUNSCH et al.: "Evaporated Amorphous GdCo-Films with Perpendicular Anisotropy by Controlled Oxygen Contamination"**

PROCEEDINGS ON MAGNETISM AND
MAGNETIC MATERIALS, Nr. 20, 1975, Seiten 573-
574, American Institute of Physics, New York,
U.S.A. N. HEIMAN: "Uniaxial Anisotropy in Rare
Earth (Gd,Ho,Tb) - Transition Metal (Fe,Co)
Amorphous Films"
JOURNAL OF APPLIED PHYSICS, Band 48, Nr. 6,
Juni 1977, Seiten 2641-2643 A. BRUNSCH et al.:
"Perpendicular Magnetic Anisotropy in
Evaporated Amorphous GdCo Films"

## Beschreibung

Die Erfindung betrifft einen magnetischen Aufzeichnungsträger, bestehend aus einem unmagnetischen, formstabilen Trägermaterial und einer darauf aufgedampften SmCo-Speicherschicht sowie ein Verfahren zu seiner Herstellung.

Es ist bekannt, daß die Leitstungsfähigkeit von magnetischen Aufzeichnungsträgern, insbesondere die erzielbare Flächenspeicherdichte deutlich verbessert werden kann, wenn an Stelle der üblichen Speicherschichten aus in einem polymeren Bindemittel feinverteilten magnetischem Material solche mit einer einheitlich metallischen Schicht verwendet werden. So beschreibt D. E. Speliotis in "Advances in Magnetic Recording", Vol. 189 (1972), Seiten 21—51 die Parameter, von welchen die erreichbare Speicherdichte eine magnetisierbaren Schicht abhängt. Es sollten die Koerzitivfeldstärke der Schicht möglichst hoch, das Verhältnis von Remanenz zu Sättigungsmagnetisierung nahezu eins und die Schichtdicke so gering wie möglich sein, wobei die Schichtstärke jedoch wegen eines ausreichenden Signalpegels zweckmäßigerweise zwischen 0,05 und 0,4 µm zu wählen ist. Derartige magnetische Metallschichten können auf unterschiedliche Weise hergestellt werden, so durch elektrolytische oder chemische Abscheidung, durch Vakuumbedampfung oder durch Sputtern. Eine Produktion magnetischer Aufzeichnungsträger mit in dieser Art hergestellten magnetischen Metallschichten ist jedoch bislang an unterschiedlichen Problemen gescheitert (B. J. Judge, "Advances in Magnetic Recording", Vol. 189 (1972), Seiten 117—129). So müssen beim Aufdampfen der Metallschichten die Trägermaterialien unter einem Einfallswinkel von größer 65° bedampft werden, um eine Ausrichtung der leichten Achse der Magnetisierung und die erforderlichen hohen Koerzitivfeldstärken zu erreichen. Ein solches Verfahren würde sich beispielsweise nicht für die Beschichtung von scheibenförmigen Trägermaterialien mit zirkularer Vorzugsrichtung eignen, wie es bei den Magnetspeicherplatten üblich ist. Die Technik des Sputterns verlangt nach dieser Arbeit, daß das Trägermaterial auf Temperaturen von 500°C und mehr erhitzt wird. Damit scheidet dieses Verfahren für die Herstellung von magnetischen Aufzeichnungsträgern aus, da die auf diesem Gebiet üblichen Trägermaterialien für solche Temperaturbelastungen nicht geeignet sind. Zudem ist festzustellen, daß sowohl chemisch abgeschiedene als auch bekannte aufgedampfte magnetische Metallschichten eine geringe mechanische Verschließfestigkeit als auch eine unzureichende Korrosionsstabilität besitzen.

Es hat daher nicht an Versuchen gefehlt, durch entsprechende Verfahren und Anordnungen, die angeführten Nachteile zu beheben. So werden sowohl in der US—PS 3 970 433 als auch in der DE—OS 25 56 755 Möglichkeiten aufgezeigt, durch eine Vorbehandlung des Trägermaterials Korrosion und Verschleiß zu verringern. Allerdings erfordert dies einen komplizierten Dreischichtenaufbau zwischen Trägermaterial und Magnetschicht, wodurch es leicht zu erhöhten Fehlerzahlen und Unregelmäßigkeiten in der Aufzeichnungsschicht kommen kann. Außerdem sind solche Aufzeichnungsträger nur unwirtschaftlich herzustellen.

Ebenso sind die in der DE—OS 26 48 303 und der DE—OS 27 56 254 offenbarten Verfahren zu Anordnung von Schutzschichten auf magnetischen Metallschichten wegen ihres vielschichtigen Aufbaus nicht voll befriedigend.

Ein Verfahren zum Herstellung von magnetischen Kobalt-Eisen-Schichten durch Aufdampfen ist in der DE—OS 22 50 481 beschrieben. Die Koerzitivfeldstärke der danach hergestellten Schichten ist jedoch stark schichtdickenabhängig und zudem bei den für derartige Aufzeichnungsträger nötigen Schichtstärken zu niedrig. Des weiteren ist bei dem hier vorgeschlagenen Verfahren eine Schrägbedampfung erforderlich.

Im Bemühen besonders hohe Koerzitivfeldstärken zu erreichen, ist es aus der US—PS 3 615 911 bekannt, $SmCo_5$-Schichten durch Sputtern herzustellen. Die apparative Anordnung ist sehr kompliziert und erlaubt nur die Herstellung relativ kleiner Proben, deren Koerzitivfeldstärken zudem derart hoch sind, daß mit den bisher bekannten Aufzeichnungs- und Wiedergabeköpfen eine Ummagnetisierung nicht erfolgen kann.

In IEEE Transactions on Magnetics, Vol. Mag-9, No. 4, Dez, 1973, S. 627—631 sind CoSm-Schichten beschrieben, die durch Trioden Sputtern bei einer Substrattemperatur von 600°C hergestellt werden. Die Schichten sind isotrop und weisen bei hoher Koerzitivfeldstärke einen relativ kleinen Rechteckfaktor auf. Ferner sind Metallschichten als einer Legierung von Eisen oder Kobalt mit einer der Seltenen Erden Gd, Tb oder Ho bekannt. Diese Schichten weisen eine zur Aufzeichnungsfläche senkrechte Anisotropie auf (DE—OS 26 58 956).

Heimann et al berichten in "Proc. on magnetism and magnetic materials" Proc. *20*, 1975, S. 573—574 über amorphe Filme aus einer Legierung von Eisen, Kobalt mit den Seltenen Erden Gd, Tb oder Ho. Die auftretende uniaxiale Anisotropie kann dabei auch in der Schichtebene liegen. Samarium, das unter den Seltenen Erden bezüglich des Kristallbaus eine Sonderstellung ennimmt, ist nicht in Betracht gezogen worden.

Aufgabe der Erfindung war es daher, Aufzeichnungsträger mit einer magnetischen Metallschicht bereitzustellen, welche hinsichtlich ihrer magnetischen und mechanischen Eigenschaften auf der Grundlage der vorhandenen Technologie voll einsetzbar und mit üblichen einfachen Verfahren herstellbar sind.

Es wurde nun gefunden, daß sich diese Aufgabe mit magnetischen Aufzeichnungsträgern, bestehend aus einem unmagnetischen, formstabilen Trägermaterial und einer 0,03 bis 0,4 µm dicken, hartmagnetischen Speicherschicht mit einer Koerzitivfeldstärke von größer 10 kA/m aus einer Sm-Co-Legierung lösen läßt, wenn die aus der Sm-Co-Legierung bestehende Speicherschicht, welche im Vakuum auf das Trägermaterial, das eine Temperatur zwischen 20 und 300°C besitzt, aufgedampft ist, amorph ist und eine uniaxiale Anisotropie in der Schichtebene mit einem Rechteckfaktor von größer 0,9 aufweist.

Insbesondere sind solche magnetischen Aufzeichnungsträger Gegenstand der Erfindung, bei denen die aufgedampfte Speicherschicht aus einer amorphen $SmCo_x$-Legierung mit Werten für x zwischen 1 und 20, insbesondere zwischen 5,6 und 16,2 besteht und eine uniaxiale magnetische Anisotropie in der Schichtebene mit einem Rechteckfaktor von größer 0,9 bei einer Koerzitivfeldstärke zwischen 10 und 100 kA/m aufweist.

Derartige Sm-Co-Schichten lassen sich durch Aufdampfen im Vakuum herstellen.

Beim Vakuumbedampfen werden die Träger nach gründlicher Reinigung in eine handelsübliche Aufdampfanlage eingebracht und die Anlage wird auf Hochvakuum ($\leqslant 10^{-6}$ Torr) evakuiert. Während der Pumpzeit können die Träger z.B. durch Quarzstrahler aufgeheizt werden. Zur Erzielung einer höheren Schichtdickengleichmäßigkeit können die Träger beweglich über der Verdampfungsquelle angeordnet werden, z.B. können scheibenförmige Träger während der Bedampfung in eine konzentrische Drehbewegung versetzt werden. Auch können die Träger so angeordnet sein, daß nach dem Aufdampfen einer ersten Schicht die Träger gewendet werden und ohne Unterbrechung des Vakuums auf die Rückseite der Träger eine zweite Schicht aufgedampft werden kann.

Als Verdampfungsquellen können beim Vakuumbedampfen Widerstands-, RF- oder Elektronenstrahlbeheizte Verdampfer eingesetzt werden. Zum Aufdampfen von Sm-Co-Schichten können zwei getrennte Quellen verwendet werden, wobei aus jeder Quelle jeweils eine Komponente der Legierung verdampft wird. Durch unabhängiges Regeln der Aufdampfraten der beiden Quellen ist es möglich, in sehr einfacher Weise die prozentuale Zusammensetzung der aufgedampften Schichten zu variieren. Bei dieser Anordnung muß darauf geachtet werden, daß die beiden Aufdampfquellen nahe nebeneinander angeordnet werden, damit sich die Dampfwolken gut durchmischen und Schichten mit homogener Zusammensetzung erhalten werden. Die Sm-Co-Schichten können aber auch aus einer Quelle aufgedampft werden, wenn als Aufdampfmaterial eine Sm-Co-Legierung verwendet wird. Diese Legierung kann beispielsweise im Tiegel einer Elektronenstrahlkanone durch Verschmelzen entsprechender Mengen von Co und Sm direkt hergestellt werden. Die unterschiedlichen Dampfdrücke der Materialien müssen dabei berücksichtigt werden, wodurch die Legierungszusammensetzung der Quelle sich von der Legierungszusammensetzung der Schicht unterscheidet. Durch wenige Versuche ist es möglich, den Konzentrationsunterschied zwischen Quelle und Schicht experimentell zu bestimmen.

Die Sm-Co-Schichten können mit unterschiedlicher Aufdampfrate hergestellt werden, indem die Leistung der Aufdampfquelle verändert wird. Die Aufdampfrate und die Schichtdicke kann während der Bedampfung durch einen Quarzmonitor überwacht werden, so daß die Bedampfung bei Erreichen der gewünschten Schichtdicke abgebrochen werden kann.

Gemäß der Erfindung lassen sich auf diese Weise amorphe Sm-Co-Schichten herstellen, wie sich aus Röntgenbeugungsuntersuchungen ergibt. Danach kann die Kristallitgröße, d.h. im Falle der zu betrachtenden amorphen Schichten der Nahordnungsbereich der Atome mit unter 2 nm angegeben werden.

Wenn auch bei derartigen Aufdampfverfahren üblicherweise Glas als Trägermaterial verwendet wird, so ist es jedoch zur Herstellung insbesondere kompatibler magnetischer Aufzeichnungsträger, insbesondere von Magnetspeicherplatten, zweckmäßig, scheibenförmige Substrate aus Aluminium bzw. Aluminiumlegierungen einzusetzen. Diese Trägermaterialien können zusätzlich durch Glimmen oder Sputterätzen gereinigt werden.

Bei dem erfindungsgemäßen Verfahren zur Herstellung der amorphen Speicherschicht aus einer Sm-Co-Legierung beträgt die Trägertemperatur beim Bedampfen (Herstelltemperatur) zwischen 20°C und 300°C, vorzugsweise zwischen 100°C und 250°C. Solche amorphe Schichten sind nämlich metastabil, d.h. die Struktur der Schichten kann sich im Laufe der Zeit verändern und dies umso mehr, je kleiner die Differnz zwischen Herstelltemperatur und Gebrauchstemperatur ist. Der erfindungsgemäße Bereich für die Herstelltemperatur ist nach oben auf 300°C begrenzt, weil oberhalb dieser Temperatur kristalline Schichten entstehen. Bei dem erfindungsgemäßen Bereich der Herstelltemperatur sind die Schichten somit schon künstlich gealtert, ohne daß jedoch der amorphe Charakter der Schichten aufgegeben wird. Auch werden in diesem Bereich der Herstelltemperatur die besten mechanischen Eigenschaften erreicht.

Bei der Herstellung der erfindungsgemäßen magnetischen Aufzeichnungsträger wurde nun überraschend festgestellt, daß sich in der amorphen Sm-Co-Schicht mit ihrer in der Schichtebene liegenden Magnetisierung, in einfacher Weise eine uniaxiale Anisotropie erzeugen läßt. Darüber hinaus ergibt sich in nicht vorhersehbarer Weise für den Fall, daß die Oberfläche des Trägermaterials, auf welche die Sm-Co-Schicht aufgedampft wird, parallel zur vorgesehenen uniaxialen Anisotropie mit rillenförmigen Vertiefungen einer Tiefe zwischen 0,03 bis 0,4 μm, vorzugsweise 0,1 bis 0,2 μm mit einem gegenseitigen Abstand zwischen 10 und 200 μm versehen ist die Möglichkeit, die leichte Achse der Magnetisierung in einer jeweils beliebigen Richtung entsprechend den vorgegebenen rillenförmigen Vertiefungen anzuordnen. Derartige Vertiefungen lassen sich insbesondere auf den für die Herstellung von Magnetspeicherplatten gängigen scheibenförmigen Aluminiumsubstraten durch Drehen und/oder konzentrisches Schleifen und Polieren bewerkstelligen, da diese Substrate im Rahmen der Fertigung

4

**0 016 404**

bereits diesen mechanischen Prozessen unterworfen wurden. Bei diesen so bearbeiteten Trägermaterialien sind dann die rillenförmigen Vertiefungen konzentrisch angeordnet. Damit läßt sich ohne besonderen Aufwand eine konzentrische uniaxiale Anisotropie entsprechend den bei Magnetspeicherplatten üblichen Aufzeichnungsspuren herstellen. Durch dieses erfindungsgemäße Verfahren läßt sich das bei dieser Herstellung von magnetischen Aufdampfschichten mit uniaxialer Anisotropie übliche Schrägbedampfen, welches mit dem Nachteil großer Schichtdickenschwankungen behaftet ist, vermeiden.

Bei der Herstellung der erfindungsgemäßen magnetischen Aufzeichnungsträger mit amorphen Sm-Co-Schichten läßt sich eine vorbestimmte räumliche Anisotropie auch durch das an sich bekannte Aufdampfen von magnetischen Metallschichten im Magnetfeld von größer 5 KA/m herstellen. Dieses Verfahren eignet sich zweckmäßigerweise für die Herstellung von magnetischen Aufzeichnungsträgern für die Longitudinalaufzeichnung und mit Kunststoffträgerfilmen.

Bei der Herstellung der erfindungsgemäßen Sm-Co-Schichten kann nach dem Aufdampfen der Sm-Co-Legierung durch anschließendes alleiniges Verdampfen von Kobalt unter einem Sauerstoff-partialdruck von $10^{-3}$ bis $10^{-5}$ Torr eine Kobaltoxiddeckschicht in einer Dicke von 5 bis 50 nm aufgebracht werden. Das Aufbringen einer solchen Deckschicht empfiehlt sich jedoch nur, wenn die Magnetschicht extremen mechanischen oder korrosiven Belastungen ausgesetzt ist.

Die erfindungsgemäßen magnetischen Aufzeichnungsträger zeichnen sich gegenüber den bisher bekannten mit magnetisierbarer Metallschicht vor allem durch eine höhere Koerzitivfeldstärke und einen höheren Rechteckfaktor, dem Verhältnis von remanenter Magnetisierung zu Sättigungsmagnetisierung, aus. Aber auch die erreichbaren mechanischen Eigenschaften, wie Haftfestigkeit, Verscheißfestigkeit und Korrosionsstabilität der Schicht sind wesentlich verbessert. Im Hinblick auf die erfindungsgemäße Ausgestaltung des Herstellungsverfahrens zur Erzeugung einer uniaxialen Anisotropie in der Ebene der Magnetschicht lassen sich diese Vorteile in besonderer Weise zur Herstellung von hochwertigen Magnetschichtspeicherplatten nutzen. Im Vergleich mit herkömmlichen Magnetspeicherplatten, welche eine Schicht aus in einem organischen Bindemittel feinverteilten magnetischen Material besitzen, sind die bezüglich der Haftfestigkeit der Schicht ebenbürtig und in der Verschleißfestigkeit deutlich überlegen.

Anhand nachfolgender Beispiele soll die Erfindung näher erläutert werden.

Beispiel 1

In einer handelsüblichen Aufdampfanlage werden auf eine Objektträger aus Glas mit zwei getrennten Elektronenstrahlkanonen gleichzeitig Samarium und Kobalt aufgedampft. Bei einem Druck von $10^{-6}$ Torr beträgt die Aufdampfrate 2 nm pro Sekunde. Bei einer Schichtdicke von 0,1 μm wird die Bedampfung beendet. Die resultierende Schicht besteht—wie durch Röntgenfluoreszenz ermittelt—aus einer $SmCo_{11,7}$-Legierung. Die Untersuchung durch Röntgenbeugung ergibt eine amorphe Struktur, d.h. die Kristallitgröße liegt unter 2 nm. Die Bestimmung der magnetischen Eigenschaften erfolgt mit einem Schwingmagnetometer in einem Meßfeld von 120 kA/m. Danach liegt die isotrope Magnetisierung in der Schichtebene. Die Koerzitivfeldstärke $H_c$ beträgt 42 kA/m.

Beispiel 2

In einer handelsüblichen Aufdampfanlage werden bei einem Betriebsdruck von $10^{-6}$ Torr auf 47×50 mm große Glasplatten (Code 7059 der Fa. Corning Glas) 0,18 μm dicke $SmCo_{3,1}$-Schichten durch Verdampfen einer $SmCo_{50}$-Legierung aus einer Elektronenstrahlkanone mit einem Tiegelinhalt von 40 cm³ hergestellt. Durch in die Anlage eingebaute Quarzstrahler ist es möglich, die Temperatur der Substrate zu erhöhen, so daß die Bedampfung bei 50 und 150°C durchgeführt werden kann. Die an den so hergestellten Schichten gemessenen magnetischen Eigenschaften sind in Tabelle 1 angegeben.

Die Ermittlung des Rechteckfaktors erfolgt durch Messung von $M_r$ (remanente Magnetisierung) und $M_s$ (Sättigungsmagnetisierung) mit dem Schwingmagnetometer. Für $M_s$ wird dabei in üblicher Weise der Wert der Magnetisierung bei $H_s$ eingesetzt, wobei $H_s$ der Feldstärke entspricht, bei der sich die Hysteresiskurven bei Feldumkehr berühren.

Vergleichsversuch 1

In einer Anlage gemäß Beispiel 2 wird unter denselben Bedingungen eine 0,18 μm dicke Kobaltschicht auf eine auf 150°C aufgeheizte Glasplatte aufgedampft. Die magnetischen Eigenschaften der Kobaltschicht sind in Tabelle 1 angegeben.

| TABELLE 1 | | | |
|---|---|---|---|
| | Substrattemperatur | $M_r/m_s$ | $H_c$ [kA/m] |
| Bsp. 2(a) | Raumtemp. | 0,95 | 34 |
| „ (b) | 50°C | 0,97 | 31 |
| „ (c) | 150°C | 1,0 | 58 |
| Vergl. Vers. 1 | 150°C | 0,7 | 9 |

Beispiel 3

Auf die Oberfläche eines scheibenförmigen Trägermaterials aus einer $AlMg_5$-Legierung werden mit einer Präzisionsdrehmaschine konzentrische rillenförmige Vertiefungen einer Tiefe von 0,2 μm mit einem

5

gegenseitigen Abstand von 50 µm erzeugt. Mit einer handelsüblichen Aufdampfanlage wird bei einem Betriebsdruck von $10^{-6}$ Torr eine 0,17 µm dicke $SmCo_{3,1}$-Schicht aufgebracht. Die magnetischen Eigenschaften dieser Schicht werden mit einem Kerr-Magnetometer bestimmt. Dabei ergibt sich beim Drehen der scheibenförmigen Probe, daß die Vorzugsrichtung der Magnetisierung parallel zu den konzentrischen Vertiefungen verläuft. Die Koerzitivfeldstärke beträgt 47 kA/m und das Rechteckverhältnis ist 0,95.

Beispiel 4

Es wird wie in Beispiel 2 beschrieben verfahren und je eine $SmCo_{7,0}$-Schicht einer Schichtdicke von 0,18 µm auf einer Aluminium-Platte ($AlMg_5$-Legierung) bei einer Temperatur des Substrats von Raumtemperatur und 100 sowie 250°C hergestellt. An diesen Proben wird die Haftfestigkeit der Magnetschicht auf dem Trägermaterial nach der Abreißmethode gemäß DIN 43 232 bestimmt. Außerdem wird die Verscheißfestigkeit der Schichten mit Hilfe eines Abriebprüfgerätes, Modell 317 der Fa. Erichsen, 5870 Hemer Sundwig/Westf., in nm Abrieb je Hun geprüft. Die Ergebnisse dieser Messungen sind in Tabelle 2 aufgeführt.

Vergleichsversuch 2

Die Messung der Haftfestigkeit der Schicht auf dem Trägermaterial sowie der Verschleißfestigkeit der Schicht gemäß Beispiel 4 werden auch an einer handelsüblichen Magnetspeicherplatte mit einer Magnetschicht aus in einem organischen Bindemittel feinverteilten magnetischen Material vorgenommen. Die Ergebnisse sind in Tabelle 2 angegeben.

<div align="center">TABELLE 2</div>

|  | Substrattemperatur | Haftfestigkeit [N/mm²] | Verschleißfestiget [nm/Hub] |
|---|---|---|---|
| Bsp. 4(a) | Raumtemp. | 1,2 | 0,26 |
| „ (b) | 100°C | 2,0 | 0,13 |
| „ (c) | 250°C | 12,9 | 0,13 |
| Vergl. Vers. 2 | — | 10 | 0,60 |

Beispiel 5

In der in Beispiel 2 beschriebenen Weise wird eine 0,18 µm dicke $SmCo_{7,1}$-Schicht auf eine Glasplatte aufgedampft (Probe A). Dieser Versuch wird nochmals wiederholt und anschließend durch Zuführen von Sauerstoff in der Aufdampfanlage ein Sauerstoffpartialdruck von $5.10^{-4}$ Torr erzeugt und lediglich Kobalt verdampft. Dadurch bildet sich auf der SmCo-Schicht eine bläuliche Deckschicht aus Kobaltoxid in einer Dicke von 50 nm (Probe B). Beide Proben werden nun 24 Stunden lang einer mit Wasserdampf gesättigten Atmosphäre von 40°C ausgesetzt. Danach läßt sich bei beiden Proben keine Veränderung der Schicht feststellen. Die Verschleißfestigkeit der Probe B erhöhte sich auf kleiner 0,10 nm/hub.

Beispiel 6

An der in Beispiel 2 beschriebenen Anlage wird ein Elektromagnet außen an die Vakuumglocke angebaut. Die Vakuumglocke besteht aus unmagnetischem Stahl. Mit diesem Elektromagnet wird im Vakuum ein homogenes Magnetfeld von 6 kA/m erzeugt, wobei die Richtung der Feldlinien parallel zur Trägerebene verlaufen. Wie im Beispiel 2 beschrieben, werden auf Glasplatten $SmCo_{3,1}$-Schichten aufgedampft. Die Richtung der uniaxialen Anisotropie wird mit dem Kerr-Magnetometer bestimmt. Dabei ergibt sich, daß die leichte Richtung der Magnetisierung parallel zu den Magnetfeldlinien beim Aufdampfen liegt.

Beispiel 7

Es wird wie in Beispiel 6 beschrieben verfahren, mit dem Unterschied, daß die Glasplatten durch einen in die Aufdampfanlage eingebauten Elektromotor während des Bedampfens in eine konzentrische Drehbewegung mit 20 Upm versetzt werden. Außerdem werden die Glasplatten nicht auf der gesamten Fläche gleichzeitig bedampft, sondern der größte Teil der Glasplatten ist durch ein feststehendes Blech abgedeckt. In diesem Blech befinden sich schmale Durchbrüche in Form von Kreissektoren mit 20° Öffnungswinkel. Die Durchbrüche sind so angeordnet, daß der Scheitelpunkt im Drehzentrum der Substrate liegt und die Längsachse der Durchbrüche senkrecht zu den Feldlinien des Elektromagneten steht. Die so hergestellten $SmCo_{3,1}$-Schichten werden bezüglich Gleichmäßigkeit der Schichtdicke durch Messung der Lichttransmission, bezüglich der Lage der leichten Richtung der Magnetisierung durch Messung mit dem Kerr-Magnetometer untersucht. Es ergibt sich, daß durch das Magnetfeld und durch die Drehbewegung der Substrate hinter dem Abdeckblech während der Bedampfung gleichmäßig dicke Sm-Co-Schichten mit einer konzentrischen Vorzugsrichtung der Magnetisierung erhalten werden.

# 0 016 404

**Patentansprüche**

1. Magnetischer Aufzeichnungsträger, bestehend aus einem unmagnetischen, formstabilen Trägermaterial und einer 0,03 bis 0,4 µm dicken, hartmagnetischen Speicherschicht mit einer Koerzitivfeldstärke von größer 10 kA/m aus einer Sm-Co-Legierung, dadurch gekennzeichnet, daß die aus der Sm-Co-Legierung bestehende Speicherschicht, welche im Vakuum auf das Trägermaterial, das eine Temperatur zwischen 20 und 300°C besitzt, aufgedampft ist, amorph ist und eine uniaxiale Anisotropie in der Schichtebene mit einem Rechteckfaktor von größer 0,9 aufweist.

2. Magnetischer Aufzeichnungsträger gemäß Anspruch 1, dadurch gekennzeichnet, daß die aufgedampfte Speicherschicht aus einer amorphen Sm-Co$_x$-Legierung mit Werten für X zwischen 1 und 20 besteht, eine uniaxiale Anisotropie in der Schichtebene mit einem Rechteckfaktor von größer 0,9 bei einer Koerzitivfeldstärke zwischen 10 und 100 kA/m aufweist.

3. Verfahren zur Herstellung magnetischer Aufzeichnungsträger gemäß Anspruch 2 durch Aufdampfen einer Sm-Co-Legierung in Vakuum auf ein unmagnetisches formstabiles Trägermaterial, dadurch gekennzeichnet, daß die Oberfläche des Trägermaterials parallel zur leichten Achse der vorgesehenen uniaxialen Anisotropie rillenförmige Vertiefungen einer Tiefe zwischen 0,03 bis 0,4 µm mit einem gegenseitigen Abstand zwischen 10 und 200 µm aufweist.

4. Verfahren zur Herstellung magnetischer Aufzeichnungsträger gemäß Anspruch 3, dadurch gekennzeichnet, daß die rillenförmigen Vertiefungen konzentrisch angeordnet sind.

5. Verfahren zur Herstellung magnetischer Aufzeichnungsträger gemäß Anspruch 2 durch Aufdampfen einer Sm-Co-Legierung im Vakuum auf ein unmagnetisches, formstabiles Trägermaterial, dadurch gekennzeichnet, daß sich das Trägermaterial beim Aufdampfen in einem parallel zu der für die Speicherschicht vorgesehenen leichten Achse der Magnetisierung angelegten annähernd homogenen magnetischen Feld von größer 5 kA/m befindet.

**Revendications**

1. Support d'enregistrement magnétique, constitué d'un matériau support, non magnétique, de forme stabile, et d'une couche de mémorisation à magnétisme dur, d'une épaisseur de 0,03 à 0,4 µm, à champ coercitif d'intensité supérieure à 10 kA/m, en un alliage Sm-Co, caractérisé par le fait que la couche de mémorisation en alliage Sm-Co, qui est vaporisée, sous vide, sur le matériau support, possédant une température comprise entre 20 et 300°C, est amorphe et possède une anisotropie uniaxiale dans le plan de couche avec un facteur de rectangularité supérieur à 0,9.

2. Support d'enregistrement magnétique selon la revendication 1, caractérisé par le fait que la couche de mémorisation vaporisée est constitué par un alliage Sm-Co amorphe, de valeur X comprise entre 1 et 20, possède une anisotropie uniaxiale dans le plan de couche avec un facteur de rectangularité supérieur à 0,9, pour une intensité de champ coercitif compris entre 10 et 100 kA/m.

3. Procédé de fabrication d'un support d'enregistrement magnétique selon la revendication 2, par vaporisation d'un alliage Sm-Co, sous vide, sur un matériau support de forme stabile, non magnétique, caractérisé par le fait que la surface du matériau support présente des évidements en forme de rainures, parallèles à l'axe léger de l'anisotropie uniaxiale prévue, d'une épaisseur comprise entre 0,03 et 0,4 µm et écartées l'une de l'autre d'une distance comprise entre 10 et 200 µm.

4. Procédé de fabrication d'un support d'enregistrement magnétique selon la revendication 3, caractérisé par le fait que les évidements en forme de rainures sont disposés concentriquement.

5. Procédé de fabrication d'un support d'enregistrement magnétique selon la revendication 2, par vaporiation d'un alliage Sm-Co, sous vide, sur un matériau support de forme stable, non magnétique, caractérisé par le fait que le matériau support, lors de la vaporisation, se trouve dans un champ magnétique approximativement homogène, appliqué parallèlement à l'axe léger de magnétisation prévu pour la couche de mémorisation et supérieur à 5 kA/m.

**Claims**

1. A magnetic recording medium comprising a non-magnetic, dimensionally stable base and an 0.03 to 0.4 µm thick, magnetically hard recording layer having a coercive force of more than 10 kA/m and consisting of an Sm-Co alloy, wherein the recording layer, which consists of the Sm-Co alloy and is vacuum-deposited on the base having a temperature of from 20 to 300°C, is amorphous and possesses uniaxial magnetic anisotropy in the plane of the layer and has a squareness ratio of more than 0.9.

2. A magnetic recording medium as claimed in claim 1, wherein the vacuum-deposited recording layer consists of an amorphous Sm-Co$_x$ alloy, where x is from 1 to 20, possesses uniaxial magnetic anisotropy in the plane of the layer and has a squareness ratio of more than 0.9 and a coercive force of from 10 to 100 kA/m.

3. A process for the manufacture of a magnetic recording medium as claimed in claim 2 by vacuum-depositing an Sm-Co alloy onto a non-magnetic, dimensionally stable base, wherein the surface of the base is provided, parallel to the intended uniaxial anisotropy, with groove-shaped depressions having a depth of from 0.03 to 0.4 µm, at a spacing of from 10 to 200 µm.

7

4. A process for the manufacture of a magnetic recording medium as claimed in claim 3, wherein the groove-shaped depressions are arranged concentrically to one another.

5. A process for the manufacture of a magnetic recording medium as claimed in claim 2 by vacuum-depositing an Sm-Co alloy onto a non-magnetic, dimensionally stable base, wherein during vacuum deposition, the base is in a substantially uniform magnetic field of more than 5 kA/m, applied parallel to the intended uniaxial anisotropy.